# EUROPÄISCHE PATENTANMELDUNG

(11) **EP 2 568 114 A1**
(43) Veröffentlichungstag der Anmeldung: **13.03.2013**
(21) Anmeldenummer: 11180679.0
(22) Anmeldetag: 09.09.2011
(51) Int. Cl.: F01D 5/00, F01D 5/14

(54) **Verfahren zum Profilieren einer Ersatzschaufel als ein Eratzteil für eine Altschaufel für eine Axialströmungsmaschine**

(71) Anmelder: Siemens Aktiengesellschaft, 80333 München (DE)
(72) Erfinder: Cornelius, Christian, 45549 Sprockhövel (DE); Matthias, Torsten, 45481 Mülheim an der Ruhr (DE)

(57) **Zusammenfassung**

Die Erfindung betrifft ein Verfahren zum Profilieren einer Ersatzschaufel (1) für eine Axialströmungsmaschine, mit den Schritten:
Erfassen der Nabenkonturgeometrie (5) und der Gehäusekonturgeometrie (6) des Strömungskanals der Altschaufel (11) sowie der Axiallage des Schwerpunkts des Schaufelblatts der Altschaufel (11);
Auslegen der Geometrie des Schaufelblatts (2) der Ersatzschaufel (1) wobei das Schaufeiblatt (2) an seine Vorderkante eine Rückwärtspfeilung (14) hat;
Definieren eines einspannungsnahen Bereichs (21) des Schaufelblatts (2), in dem der positive Einfluss der Rückwärtspfeilung (14) auf den Stufenwirkungsgrad als gering eingestuft wird;
axiales Verschieben des außerhalb des Bereichs (21) angeordneten Schaufelblattsabschnitts der Ersatzschaufel (1) stromauf, bis die Axiallage des Schwerpunkts des Schaufelblatts (2) der Ersatzschaufel (1) mit der der Altschaufel (11) zusammenfällt
und wobei im Bereich (21) vom einspannseitigen Schnitt (5) bis zum verschobenen Schaufelblattabschnitt der Ersatzschaufel (2) die Vorderkante (7) zur Einspannung hin stromab geneigt wird, wodurch das Schaufelblatt (2) in diesem Bereich (21) eine Übergangspfeilung (19) hat.

## Beschreibung

Die Erfindung betrifft ein Verfahren zum Profilieren einer Ersatzschaufel als ein Ersatzteil für eine Altschaufel für eine Axialströmungsmaschine, wobei die Ersatzschaufel eine Rotorschaufel oder eine Statorschaufel für eine Gasturbine ist.

Eine Gasturbine, insbesondere eine instationäre Gasturbine, hat herkömmlich eine Betriebsdauer von etwa 30 Jahren. Während dieser Zeitdauer wurden bisher technische Neuerungen insbesondere zur Verbesserung des thermischen Wirkungsgrads der Gasturbine zur Marktreife gebracht. Wünschenswert ist es, dass eine bereits installierte Gasturbine zumindest teilweise mit diesen technischen Neuerungen ausgerüstet wird, um damit eine entsprechende Wirkungsgradsteigerung bei der Gasturbine zu erzielen. Zur Implementierung der technischen Neuerungen in die bereits installierte Gasturbine werden herkömmlich mit den technischen Neuerungen versehene und modifizierte Bauteile bereitgestellt, die mit ihren älteren Pendants in der Gasturbine ausgetauscht werden. Es ist erstrebenswert, eine möglichst geringe Anzahl an den Bauteilen in der Gasturbine auszutauschen, um den Aufwand der Aufrüstung und die Kosten hierfür möglichst gering zu halten.

Die stationäre Gasturbine für eine Kraftwerksanwendung ist herkömmlich in Axialbauweise ausgeführt. Der Verdichter der Gasturbine weist in der Regel mehrere in Durchströmungsrichtung axial hintereinander angeordnete Stufen auf, wobei jede Stufe von einem Rotor zugeordnete und einen Laufschaufelkranz bildende Laufschaufeln sowie einen Leitschaufelkranz bildende Leitschaufeln umfasst ist. Die Laufschaufeln rotieren zusammen mit dem Rotor gegenüber den feststehenden Leitschaufeln, wobei insbesondere die strömungsmechanischen Wirkungsgrade der Laufschaufeln und der Leitschaufeln den strömungsmechanischen Wirkungsgrad der Stufe bestimmen. Durch den Einsatz von numerischen Strömungslösern bei der Profilierung der Schaufeln konnten in den letzten Jahren beträchtliche Verbesserungen des Stufenwirkungsgrads erzielt werden. Somit ist es wünschenswert, dass insbesondere für den Verdichter der Gasturbine die bestehende Beschaufelung entfernt und mit einer nach modernen Gesichtspunkten ausgelegten Beschaufelung ersetzt wird. Der Rotor verbleibt in der Gasturbine, wodurch die mechanische Schnittstelle zwischen der Beschaufelung und dem Rotor an der Schaufelbefestigung unverändert bleibt.

Führt jedoch die Profilierung der neuen Beschaufelung zu einer Änderung der Schwerpunkte der Schaufelblätter, verändert sich die mechanische Beanspruchung der Schaufelbefestigung. In der Regel führt dies zu ungünstigen Belastungen der Schaufelbefestigung, wodurch die Profilierung der neuen Beschaufelung auf die maximal zulässigen Belastungswerte der Schaufelbefestigung abzustimmen ist. In der Regel führt dies zu Einschränkungen bei der Profilierung der neuen Beschaufelung, wodurch prinzipiell erreichbare Wirkungsgradsteigerungen nicht umsetzbar sind.

Insbesondere für die Verdichterrotorschaufeln hat sich gezeigt, dass bei der Profilierung eine Einführung einer Rückwärtspfeilung in der unteren Hälfe des Strömungskanals die aerodynamische Leistungsfähigkeit der Verdichterrotorschaufeln erhöht. Damit geht allerdings eine entsprechende Verschiebung der Schaufelschwerpunkte und der Schaufelhinterkante in Richtung der stromab liegenden Leitschaufelreihe einher. Hervorgerufen durch diese Schwerpunktverschiebung verschlechtert sich die ursprünglich vorherrschende Symmetrie der Belastung der Schaufelbefestigung innerhalb der Schaufelnuten, so dass beim Profilieren der Verdichterrotorschaufeln der Grad der Rückwärtspfeilung stark limitiert ist. Um dennoch die Verdichterrotorschaufeln mit der Rückwärtspfeilung zu versehen, wurde die Abweichung der Fädelungslinie von Axialschnitten der neuen Beschaufelung verglichen mit der Fädelungslinie von Axialschnitten der alten Beschaufelung innerhalb eines noch zulässigen Bereichs begrenzt. Damit wurde erreicht, dass die Belastung im Schaufelfuß und an der Umfangsnut beim Betrieb der Gasturbine nicht unzulässig hoch wird. Dadurch bleibt allerdings ein wesentliches Potential und Wirkungsgradverbesserung ungenutzt.

Abhilfe könnte eine Verkürzung der Sehnenlänge an der Schaufelwurzel der neuen Beschaufelung schaffen. Diese Maßnahme wäre allerdings nachteilig hinsichtlich der aerodynamischen Belastbarkeit und Stabilität der neuen Beschaufelung und ihrer strukturmechanischen Integrität.

Aufgabe der Erfindung ist es, ein Verfahren zum Profilieren einer Ersatzschaufel als ein Ersatzteil für eine Altschaufel für eine Axialströmungsmaschine, eine Rotorschaufel und eine Statorschaufel für eine Gasturbine sowie die Gasturbine mit der Rotorschaufel und/oder der Statorschaufel zu schaffen, wobei die Gasturbine einen hohen thermodynamischen Wirkungsgrad hat.

Die Aufgabe wird gelöst mit den Merkmalen der Patentansprüche 1, 8 bis 10. Bevorzugte Ausgestaltungen dazu sind in den weiteren Patentansprüchen angegeben.

Das erfindungsgemäße Verfahren zum Profilieren einer Ersatzschaufel als ein Ersatzteil für eine Altschaufel für eine Axialströmungsmaschine weist die Schritte auf: Erfassen der Nabenkonturgeometrie und der Gehäusekonturgeometrie des Strömungskanals der Altschaufel, die einseitig an der Nabe oder am Gehäuse eingespannt ist, sowie der Axiallage des Schwerpunkts des Schaufelblatts und/oder des maximal ausnutzbaren Axialbauraums der Altschaufel; Auslegen der Geometrie des Schaufelblatts der Ersatzschaufel, wobei der einspannungsseitige Schnitt des Schaufelblatts der Ersatzschaufel im Wesentlichen am selben Ort des einspannungsseitigen Schnitts des Schaufelblatts der Altschaufel liegt und das Schaufelblatt der Ersatzschaufel im Hinblick auf eine Optimierung des Stufenwirkungsgrads an seiner Vorderkante zur Einspannung hin stromauf geneigt wird, wodurch das Schaufelblatt eine Rückwärtspfeilung hat; Definieren eines einspannungsnahen Bereichs des Schaufelblatts der Ersatzschaufel, in dem der positive Einfluss der Rückwärtspfeilung auf den Stufenwirkungsgrad als gering eingestuft wird; axiales Verschieben des außerhalb des Bereichs angeordneten Schaufelblattabschnitts der Ersatzschaufel stromauf, bis die Axiallage des Schwerpunkts des Schaufelblatts der Ersatzschaufel mit der Axiallage des Schwerpunkts des Schaufelblatts der Altschaufel im Wesentlichen zusammenfällt und/oder die mechanische Integrität der Ersatzschaufel unter Ausnutzen des maximal ausnutzbaren Axialbauraums der Altschaufel erreicht ist, wobei im Bereich vom einspannungsseitigen Schnitt des Schaufelblatts der Ersatzschaufel bis zum verschobenen Schaufelblattabschnitt der Ersatzschaufel die Vorderkante zur Einspannung hin stromab geneigt wird, wodurch das Schaufelblatt in diesem Bereich eine Übergangspfeilung hat.

Bevorzugtermaßen ist die Axialströmungsmaschine ein Verdichter und/oder eine Turbine einer Gasturbine. Die erfindungsgemäße Rotorschaufel für die Gasturbine ist die Ersatzschaufel, die mit dem erfindungsgemäßen Verfahren ausgelegt ist. Ferner ist die erfindungsgemäße Statorschaufel die Ersatzschaufel, die mit dem erfindungsgemäßen Verfahren ausgelegt ist. Die erfindungsgemäße Gasturbine weist die Rotorschaufel und/oder die Statorschaufel auf.

Der einspannungsnahe Bereich des Schaufelblatts der Ersatzschaufel, in dem der positive Einfluss der Rückwärtspfeilung auf den Stufenwirkungsgrad als gering eingestuft wird, entspricht bevorzugt der Radialerstreckung der Nabengrenzschicht oder der einspannungsseitigen Sekundärströmung. Bevorzugtermaßen ist der Bereich 5% bis 15% der Schaufelhöhe der Ersatzschaufel.

Die Sehnenlänge der Schaufelwurzel der Ersatzschaufel entspricht bevorzugt im Wesentlichen der Sehnenlänge der Schaufelwurzel der Altschaufel. Ferner weist das Verfahren bevorzugt den Schritt auf: Auslegen der Geometrie des Schaufelblatts der Ersatzschaufel, wobei das Schaufelblatt im Hinblick auf eine Optimierung des Stufenwirkungsgrads an seiner Vorderkante zur Einspannung radial abgewandten Seite hin stromauf geneigt wird, wodurch das Schaufelblatt außerhalb der Rückwärtspfeilung eine Vorwärtspfeilung hat. Außerdem ist es bevorzugt, dass sich die Rückwärtspfeilung der Vorderkante der Ersatzschaufel lediglich in der radial einspannungsseitigen Hälfte des Strömungskanals erstreckt.

Die Übergangspfeilung ist erfindungsgemäß als eine Vorwärtspfeilung ausgebildet. Durch sie wird der Schwerpunkt des Schaufelblatts der Ersatzschaufel in Strömungsrichtung nach vorne verschoben, wodurch der Schwerpunkt des Schaufelblatts der Ersatzschaufel die Lage des Schwerpunkts des Schaufelblatts der Altschaufel einnimmt und/oder die mechanische Integrität der Ersatzschaufel unter Ausnutzen des maximal ausnutzbaren Axialbauraums der Altschaufel erreicht ist. In der Gasturbine ist die Altschaufel von der Ersatzschaufel ersetzt. Dabei wird die Altschaufel beispielsweise von einem Rotor der Gasturbine abmontiert und die Ersatzschaufel an die Stelle der Altschaufel montiert. Herkömmlich ist die Altschaufel bzw. die Ersatzschaufel formschlüssig an dem Rotor der Gasturbine eingespannt. Dadurch, dass der Schwerpunkt der Ersatzschaufel im Wesentlichen in derselben Axialposition wie der Schwerpunkt der Altschaufel liegt und/oder die mechanische Integrität der Ersatzschaufel unter Ausnutzen des maximal ausnutzbaren Axialbauraums der Altschaufel erreicht ist, ist die Beanspruchung der formschlüssigen Befestigung der Ersatzschaufel im Wesentlichen gleich der Belastung der formschlüssigen Befestigung der Altschaufel. Dies ist insbesondere deshalb vorteilhaft, da aufgrund des Vorsehens der Rückwärtspfeilung bei der Profilierung der Ersatzschaufel zum Erreichen des hohen Stufenwirkungsgrads die mechanische Belastung der Schaufelbefestigung beim Betrieb der Gasturbine mit der Ersatzschaufel im Wesentlichen gleich groß ist verglichen mit dem Betrieb mit der Altschaufel ist.

Die Übergangspfeilung ist lokal auf den Bereich beschränkt, der einspannungsnah ist und lediglich eine geringe Beeinträchtigung des positiven Einflusses der Rückwärtspfeilung auf den Stufenwirkungsgrad hat. Dadurch ist der aerodynamische Einfluss der Übergangspfeilung gering, wohingegen strukturmechanische Nachteile einer standardmäßig mit einer Rückwärtspfeilung versehenen Schaufel reduziert sind. Die Übergangspfeilung ist bevorzugt auf einen Bereich von 5% bis 15% der Schaufelhöhe der Ersatzschaufel begrenzt. Somit kann im Bereich höherer Strömungsgeschwindigkeiten außerhalb von 5% bis 15% der Schaufelhöhe der Ersatzschaufel der Vorteil der Rückwärtspfeilung genutzt werden. Außerdem ist bei der erfindungsgemäßen Rotorschaufel der Abstand zu einer stromab liegenden herkömmlichen Statorschaufel größer, als wenn eine Rotorschaufel herkömmlich mit der Rückwärtspfeilung und ohne der Übergangspfeilung versehen wäre. Dadurch ist die Anregung durch aerodynamische Kräfte hervorgerufen durch die Rotation der erfindungsgemäßen Rotorschaufel gering.

Im Folgenden wird eine bevorzugte Ausführungsform einer mit dem erfindungsgemäßen Verfahren profilierten Rotorschaufel als eine Ersatzschaufel für eine Altschaufel für eine Gasturbine anhand der beigefügten schematischen Zeichnungen erläutert. Es zeigen:
- Figur 1: eine Draufsicht in Umfangsrichtung der Rotorschaufel und
- Figur 2: eine perspektivische Darstellung der Rotorschaufel aus Figur 1.

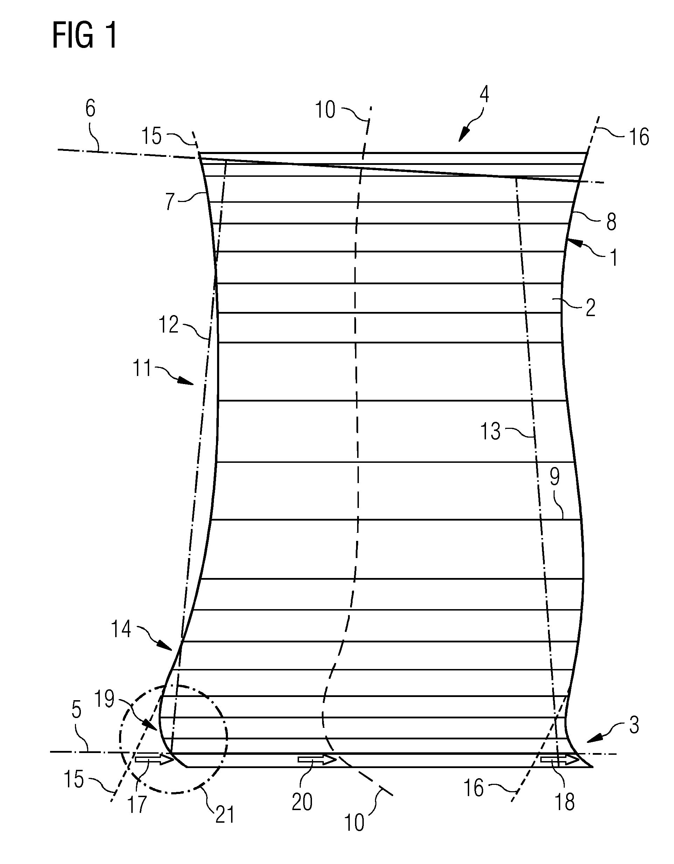

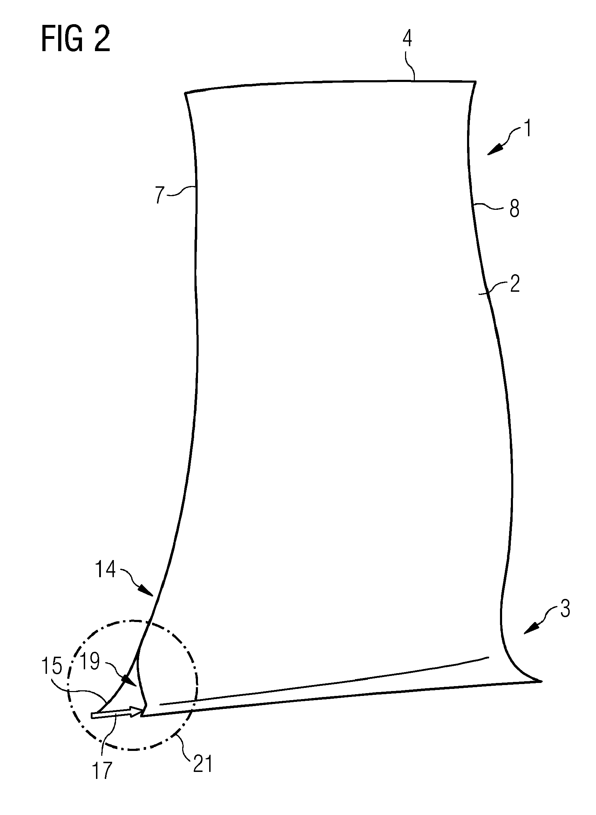

Wie es aus Figuren 1 und 2 ersichtlich ist, weist eine Ersatzschaufel 1, die eine Rotorschaufel ist, ein Schaufelblatt 2 und eine Schaufelwurzel 3 auf, die an einem Schaufelfuß (nicht gezeigt) mit einem Rotor einer Gasturbine formschlüssig einspannbar ist. Hierzu ist an der Schaufelwurzel 3 der Schaufelfuß ausgebildet, der ein Fußprofil aufweist. Als Gegenstück hierzu ist in dem Rotor eine Nut mit einem entsprechenden Profil vorgesehen, wobei der Schaufelfuß in die Nut einsetzbar ist.

Am radial abgewandten Ende der Schaufelspitze 2 weist die Ersatzschaufel 1 eine Schaufelspitze 4 auf. Die Schaufelspitze 4 ist im Einbauzustand der Ersatzschaufel 1 unmittelbar benachbart zu einer Gehäuseinnenseite angeordnet, wodurch zwischen der Gehäuseinnenseite und der Schaufelspitze 4 ein Radialspalt ausgebildet ist. Im Auslegungszustand fällt die Schaufelspitze 4 mit einer Gehäusekonturlinie 6 zusammen, die betriebsbedingt für den Einbau und den Betrieb der Ersatzschaufel 1 in die Gasturbine vorgegeben ist. Analog hierzu ist eine Nabenkonturlinie 5 vorgegeben, durch die im Auslegungszustand das Schaufelblatt 2 an der Nabe begrenzt ist. Die Ersatzschaufel 1 ist an der Nabe eingespannt. Das Schaufelblatt 2 weist eine Vorderkante 7 und eine Hinterkante 8 auf. In Figur 1 ist das Schaufelblatt 2 durch eine Mehrzahl von Axialschnitten 9 dargestellt. Jeder Axialschnitt 9 hat einen Schwerpunkt, wobei die Schwerpunkte der Axialschnitte auf einer Schwerelinie 10 aufgefädelt sind.

Die Ersatzschaufel 1 ist für eine Altschaufel 11 vorgesehen. Die Altschaufel 11 weist eine Vorderkante 12 und eine Hinterkante 13 auf. Die Altschaufel 11 ist herkömmlich profiliert, wobei die Vorderkante 12 und die Hinterkante 13 der Altschaufel 11 geradlinig ausgebildet sind. Im Gegensatz zur Profilierung der Altschaufel 11 ist die Ersatzschaufel 1 gemäß modernen Gesichtspunkten profiliert. Im Zuge dessen ist die Vorderkante 7 der Ersatzschaufel 1 im unteren Kanalbereich mit einer Rückwärtspfeilung 14 versehen. Zusätzlich ist die Vorderkante 7 der Ersatzschaufel 1 im oberen Kanalabschnitt mit einer Vorwärtspfeilung ausgestattet.

Beim Profilieren des Schaufelblatts 2 der Ersatzschaufel 1 ist wie folgt vorzugehen: Zuerst sind die Geometrien der Nabenkonturlinie 5 und der Gehäusekonturlinie 6 der Altschaufel 11 zu erfassen. Ferner ist die Axiallage des Schwerpunkts des Schaufelblatts der Altschaufel 11 und/oder die maximal mögliche Envelope der Altschaufel 11 zu erfassen. Als Nächstes ist die Geometrie des Schaufelblatts 2 der Ersatzschaufel 1 auszulegen, wobei der Nabenschnitt des Schaufelblatts 2 der Ersatzschaufel 1 im Wesentlichen am selben Ort des Nabenschnitts des Schaufelblatts der Altschaufel 1 anzuordnen ist und/oder die mechanische Integrität der Ersatzschaufel 1 unter Ausnutzen der maximal möglichen Envelope der Altschaufel 11 erreicht ist. Dies ist notwendig, da die Ersatzschaufel 1 an die Stelle der Altschaufel 11 in der Gasturbine einzubauen ist, wobei dieselbe Schaufelbefestigung für die Ersatzschaufel 1 als für die Altschaufel 11 zu nehmen ist. Ferner ist das Schaufelblatt 2 der Ersatzschaufel 1 im Hinblick auf eine Optimierung des Stufenwirkungsgrads an seiner Vorderkante 7 zur Nabe hin stromauf zu neigen, wodurch das Schaufelblatt 2 der Ersatzschaufel 1 die Rückwärtspfeilung 14 erhält. Nun ist die Axiallage des Schwerpunkts des Schaufelblatts 2 der Ersatzschaufel 1 zu erfassen.

Ferner ist ein einspannungsnaher Bereich des Schaufelblatts 2 der Ersatzschaufel 1 nach der Maßgabe zu definieren, dass in dem Bereich 21 der positive Einfluss der Rückwärtspfeilung 14 auf den Stufenwirkungsgrad als gering eingestuft wird. Hierzu ist bevorzugt die Radialerstreckung der einspannungsseitigen Nabengrenzschicht der Ersatzschaufel 1 abzuschätzen, wobei diese Radialerstreckung dem Bereich 21 entspricht. Alternativ hierzu ist bevorzugt die Radialerstreckung der nabenseitigen Sekundärströmung der Ersatzschaufel 1 zu nehmen. Ferner alternativ hierzu ist der Bereich 21 als 5% bis 15% der Schaufelhöhe der Ersatzschaufel 1 zu definieren.

Als Ergebnis der Auslegung der Geometrie des Schaufelblatts 2 der Ersatzschaufel 1 ergibt sich eine Vorderkantenlinie 15 und eine Hinterkantenlinie 16 für das Schaufelblatt 2 der Ersatzschaufel 1. Die Vorderkantenlinie 15 weist nabenseitig die Rückwärtspfeilung 14 auf. Als nächsten Schritt ist der Außerhalb des Bereichs 21 angeordnete Schaufelblattabschnitt der Ersatzschaufel 1 stromauf axial so zu verschieben, bis die Axiallage des Schwerpunkts des dadurch neu erhaltenen Schaufelblatts 2 der Ersatzschaufel 1 mit der Axiallage des Schwerpunkts des Schaufelblatts der Altschaufel 11 im Wesentlichen zusammenfällt. Dadurch, dass der Nabenschnitt des Schaufelblatts 2 der Ersatzschaufel 1 an seiner ursprünglich festgelegten und mit dem Nabenschnitt der Altschaufel zu fallenden Position verbleibt, ist insbesondere an der Vorderkante 7 des Schaufelblatts 2 der Ersatzschaufel 1 ein Vorderkantenversatz 17 und an der Hinterkante 8 des Schaufelblatts 2 der Ersatzschaufel 1 ein Hinterkantenversatz 18 bewerkstelligt. Zum Übergang von dem Nabenschnitt des Schaufelblatts 2 der Ersatzschaufel 1 zu dem außerhalb des Bereichs 21 angeordneten Schaufelblattabschnitts der Ersatzschaufel 1 ist im Bereich 21 die Vorderkante zur Nabe hin stromab zu neigen, wodurch sich im Bereich 21 für die Vorderkante 7 der Ersatzschaufel 1 eine Übergangspfeilung 19 ergibt. Die Übergangspfeilung 19 ist eine Vorwärtspfeilung und beeinträchtigt nur in geringem Maß den Stufenwirkungsgrad, da die Übergangspfeilung 19 in dem Bereich 21 liegt.

Hervorgerufen durch das Vorsehen des Vorderkantenversatzes 17, des Hinterkantenversatzes 18 bzw. der Übergangspfeilung 19 ist im Nabenschnitt des Schaufelblatts 2 der Ersatzschaufel 1 eine Schwerpunktverschiebung 20 stromab erfolgt, so dass der Schwerpunkt des Schaufelblatts 2 der Ersatzschaufel 1 mit dem Schwerpunkt des Schaufelblatts der Altschaufel 11 im Wesentlichen zusammenfällt. Bei der Auslegung der Geometrie des Schaufelblatts ist ferner die Sehnenlänge der Schaufelwurzel 3 der Ersatzschaufel 1 im Wesentlichen der Sehnenlänge der Schaufelwurzel der Altschaufel 11 gewählt.

## Patentansprüche

1. Verfahren zum Profilieren einer Ersatzschaufel (1) als ein Ersatzteil für eine Altschaufel (11) für eine Axialströmungsmaschine, mit den Schritten:
- Erfassen der Nabenkonturgeometrie (5) und der Gehäusekonturgeometrie (6) des Strömungskanals der Altschaufel (11) sowie der Axiallage des Schwerpunkts des Schaufelblatts der Altschaufel (11), die einseitig an der Nabe oder am Gehäuse eingespannt ist, und/oder des maximal ausnutzbaren Axialbauraums der Altschaufel (11);
- Auslegen der Geometrie des Schaufelblatts (2) der Ersatzschaufel (1), wobei der einspannungsseitige Schnitt (5, 6) des Schaufelblatts (2) der Ersatzschaufel (1) im Wesentlichen am selben Ort des einspannungsseitigen Schnitts (5, 6) des Schaufelblatts der Altschaufel (1) liegt und das Schaufelblatt (2) der Ersatzschaufel (1) im Hinblick auf eine Optimierung des Stufenwirkungsgrads an seiner Vorderkante (7) zur Einspannung hin stromauf geneigt wird, wodurch das Schaufelblatt (2) eine Rückwärtspfeilung (14) hat;
- Definieren eines einspannungsnahen Bereichs (21) des Schaufelblatts (2) der Ersatzschaufel (1), in dem der positive Einfluss der Rückwärtspfeilung (14) auf den Stufenwirkungsgrad als gering eingestuft wird;
- axiales Verschieben des außerhalb des Bereichs (21) angeordneten Schaufelblattsabschnitts der Ersatzschaufel (1) stromauf, bis die Axiallage des Schwerpunkts des Schaufelblatts (2) der Ersatzschaufel (1) mit der Axiallage des Schwerpunkts des Schaufelblatts der Altschaufel (11) im Wesentlichen zusammenfällt und/oder die mechanische Integrität der Ersatzschaufel (1) unter Ausnutzen des maximal ausnutzbaren Axialbauraums der Altschaufel (11) erreicht ist,
wobei im Bereich (21) vom einspannseitigen Schnitt (5) des Schaufelblatts (2) der Ersatzschaufel (1) bis zum verschobenen Schaufelblattabschnitt der Ersatzschaufel (2) die Vorderkante (7) zur Einspannung hin stromab geneigt wird, wodurch das Schaufelblatt (2) in diesem Bereich (21) eine Übergangspfeilung (19) hat.

2. Verfahren gemäß Anspruch 1,
wobei der Bereich (21) der Radialersteckung der Nabengrenzschicht entspricht.

3. Verfahren gemäß Anspruch 1,
wobei der Bereich (21) der Radialersteckung der nabenseitigen Sekundärströmung entspricht.

4. Verfahren gemäß einem der Ansprüche 1 bis 3,
wobei der Bereich (21) 5% bis 15% der Schaufelhöhe der Ersatzschaufel (1) ist.

5. Verfahren gemäß einem der Ansprüche 1 bis 4,
wobei die Sehnenlänge Schaufelwurzel (3) der Ersatzschaufel (1) im Wesentlichen der Sehnenlänge der Schaufelwurzel der Altschaufel (11) entspricht.

6. Verfahren gemäß einem der Ansprüche 1 bis 5,
mit dem Schritt:
Auslegen der Geometrie des Schaufelblatts (2) der Ersatzschaufel (1),
wobei das Schaufelblatt (2) im Hinblick auf eine Optimierung des Stufenwirkungsgrads an seiner Vorderkante (7) zur Einspannung radial abgewandten Seite hin stromauf geneigt wird, wodurch das Schaufelblatt (2) außerhalb der Rückwärtspfeilung (14) eine Vorwärtspfeilung (15) hat.

7. Verfahren gemäß einem der Ansprüche 1 bis 6,
wobei sich die Rückwärtspfeilung (14) der Vorderkante (7) der Ersatzschaufel (1) lediglich in der radial einspannungsseitigen Hälfte des Strömungskanals erstreckt.

8. Rotorschaufel für eine Gasturbine,
wobei die Rotorschaufel eine Ersatzschaufel (1) ist, die mit einem Verfahren gemäß einem der Ansprüche 1 bis 7 ausgelegt ist.

9. Statorschaufel für eine Gasturbine,
wobei die Statorschaufel eine Ersatzschaufel (1) ist, die mit einem Verfahren gemäß einem der Ansprüche 1 bis 7 ausgelegt ist.

10. Gasturbine mit einer Rotorschaufel gemäß Anspruch 8 und/oder einer Statorschaufel gemäß Anspruch 9.
